# EUROPÄISCHE PATENTSCHRIFT

(11) **EP 3 058 802 B1**
(45) Veröffentlichungstag und Bekanntmachung des Hinweises auf die Patenterteilung: **10.01.2018**
(21) Anmeldenummer: 15195363.5
(22) Anmeldetag: 19.11.2015
(51) Int. Cl.: A01D 41/14, A01D 43/08

(54) **GRÜNGUTSCHNEIDWERK ZUR VERWENDUNG AN EINEM FELDHÄCKSLER**
FORAGE CUTTER FOR USE ON A FORAGE HARVESTER
BARRE DE COUPE DE FOURRAGE DESTINÉE À ÊTRE UTILISÉE SUR UNE RAMASSEUSE-HACHEUSE

(30) Priorität: 15.01.2015 DE 102015200536
(43) Veröffentlichungstag der Anmeldung: 24.08.2016
(73) Patentinhaber: Maschinenfabrik Kemper GmbH & Co. KG, 48703 Stadtlohn (DE)
(72) Erfinder: Nordhoff, Hendrik, 48727 Billerbeck (DE); Icking, Bernd, 48703 Stadtlohn (DE)
(74) Vertreter: Holst, Sönke

(56) Entgegenhaltungen:
- EP-A1- 2 111 740
- WO-A1-2014/076600
- US-A- 3 096 605

## Beschreibung

Die Erfindung betrifft ein Grüngutschneidwerk zur Verwendung an einem Feldhäcksler nach dem Oberbegriff des Anspruchs 1.

### Technologischer Hintergrund

Grüngutschneidwerke werden als Erntevorsätze vor Feldhäckslern eingesetzt, um relativ weiche Pflanzen ,wie Gras oder unreifes Getreide, abzuschneiden und dem Feldhäcksler zuzuführen, in dem sie gehäckselt und auf ein Transportfahrzeug überladen werden. Die gehäckselten Pflanzen dienen in der Regel als Ganzpflanzensilage zur Verfütterung an Vieh.

Derartige Grüngutschneidwerke umfassen üblicherweise eine Anzahl an seitlich nebeneinander angeordneten Mähtrommeln oder Mähscheiben zum Abschneiden des Ernteguts und einen dahinter angeordneten Querförderer, der das Erntegut zur Mitte des Grüngutschneidwerks fördert, von wo es durch einen Abgabeförderer nach hinten zum Einzugskanal des Feldhäckslers verbracht wird. Der Querförderer ist üblicherweise ein Schneckenförderer, dessen mittiger Bereich als Abgabeförderer dient (US 8 806 844 B2) oder es werden Förderbänder als Quer- und Abgabeförderer verwendet (DE 101 16 982 A1), wie sie an sich auch bei Getreideschneidwerken verwendet werden.

Im Stand der Technik sind Grüngutschneidwerke mit starren Rahmen versehen, d.h. sie sind nicht in eine Transportstellung einklappbar, sondern werden als Ganzes auf einem Transportanhänger abgelegt, um sie beim Transport auf einer Straße hinter dem Feldhäcksler herzuziehen. Dabei entstehen hohe Zeitverluste zum Ab- und Anbau des Grüngutschneidwerks am Feldhäcksler. Analoge Anmerkungen gelten auch für Getreideschneidwerke mit Querförderbändern, deren Seitenteile allenfalls zu Wartungszwecken von Hand hochklappbar sind (EP 2 695 510 A1).

Es ist weiterhin vorgeschlagen worden, Erntevorsätze zur Maisernte zum Straßentransport klappbar zu gestalten (EP 0 992 187 A1), wie auch ein Hochschwenken von Mäh- und Fördereinheiten bei einem Mähgerät zum Straßentransport (DE 103 32 756 A1). Es werden jeweils die Schneidelemente und die dahinter angeordneten Querförderelemente gemeinsam nach oben geschwenkt.

Die als gattungsbildend angesehene WO 2014/076600 A1 beschreibt ein Grüngutschneidwerk mit vorderen Mäheinheiten und einer rückwärtig davon angeordneten Querförderschnecke, die das Erntegut nach hinten abgibt. Das Grüngutschneidwerk umfasst einen dreiteiligen Rahmen, der es ermöglicht, die äußeren Mäheinheiten und die dahinter angeordneten Teile der Querförderschnecke um 180° nach oben und innen zu verschwenken, während der mittlere Teil mit dem Mittelteil der Querförderschnecke und den davor angeordneten Mäheinheiten stationär bleibt.

### Aufgabe

Die vorliegende Erfindung hat sich zur Aufgabe gesetzt, ein gegenüber dem Stand der Technik verbessertes Grüngutschneidwerk bereitzustellen.

### Erfindung

Die vorliegende Erfindung wird durch die Patentansprüche definiert.

Ein Grüngutschneidwerk zur Verwendung an einem Feldhäcksler umfasst einen sich quer zu einer Vorwärtsrichtung erstreckenden Rahmen, eine Anzahl von an der Vorderseite des Grüngutschneidwerks über dessen Breite verteilten, um die Hochachse in Drehung versetzbaren Mähelementen insbesondere in Form von Mähscheiben oder Mähtrommeln zum Abschneiden von Erntegut vom Boden und zwei an den Seiten des Grüngutschneidwerks angeordnete Querförderer, die eingerichtet sind, das von den in Vorwärtsrichtung davor angeordneten Mähelementen abgeschnittene Ernte zur Mitte des Grüngutschneidwerks zu fördern, wo es durch einen Abgabeförderer, der eingerichtet ist, auch das von den vor dem Abgabeförderer angeordneten Mähelementen abgeschnittene Erntegut abzufördern, nach hinten durch eine rückwärtige Abgabeöffnung des Grüngutschneidwerks abförderbar ist. Der Rahmen umfasst einen mittleren Teil und zwei Außenteile auf, welche durch einen zugehörigen Verstellantrieb zwischen einer abgesenkten Betriebsposition und einer angehobenen Transportposition bewegbar sind, in der sie um horizontale, sich in Vorwärtsrichtung erstreckende Schwenkachsen gegenüber dem mittleren Teil nach oben geschwenkt sind. Die Außenteile des Rahmens stützen jeweils einen Querförderer und die davor angeordneten Mähelemente ab, während und der mittlere Teil den Abgabeförderer abstützt.

Somit bleibt der mittlere Teil des Rahmens in der Transportposition in seiner Stellung, in der er sich auch beim Erntebetrieb befindet, während die Außenteile nach innen und oben in die Transportstellung verschwenkt werden. Der mittlere Teil des Rahmens ist trennbar mit dem Einzugsgehäuse eines selbstfahrenden Feldhäckslers verbindbar, damit durch den Abgabeförderer Erntegut durch die rückwärtige Abgabeöffnung des Grüngutschneidwerks in das Einzugsgehäuse gefördert werden kann. Im Ergebnis kann das Grüngutschneidwerk auch beim Transport auf einer Straße an der Vorderseite des Feldhäckslers verbleiben, was eine große Zeitersparnis bedeutet gegenüber dem bisherigen Transport auf einem Anhänger.

Die Außenteile stützen auch jeweils die ihnen benachbarte Hälfte der vor dem Abgabeförderer angeordneten Mähelemente ab, sodass die besagten Mähelemente gemeinsam mit den Außenteilen in eine nach oben geschwenkte Transportposition verschwenkbar sind. Dadurch erübrigt sich ein separater Antriebsstrang für die besagten Mähelemente, da sie von außen her gemeinsam mit den Mähelementen des zugehörigen Außenteils angetrieben werden, und eine getrennte, vor dem Transport an deren Vorderseite anzubringende Sicherheitsabdeckung. Insbesondere sind die Außenteile um jeweils etwa 90° zwischen der Betriebs- und Transportposition verschwenkbar.

Die Querförderer und/oder der Abgabeförderer können ein Förderband aufweisen, die insbesondere nach vorn und unten hin geneigt sind.

Die Schwenkachsen liegen vorzugsweise oberhalb der durch die Querförderer definierten Ebene.

Der Abgabeöffnung benachbart kann oberhalb des Abgabeförderers ein weiterer Förderer angeordnet sein.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
Fig. 1 eine Frontansicht eines Feldhäckslers mit einem daran angebrachten Grüngutschneidwerk, das sich in der Betriebsposition befindet,
Fig. 2 eine Frontansicht des Feldhäckslers mit dem Grüngutschneidwerk aus Figur 1, das sich in der Transportposition befindet,
Fig. 3 eine Seitenansicht des Feldhäckslers und Grüngutschneidwerks der Figur 1, und
Fig. 4 eine Draufsicht auf das Grüngutschneidwerks der Figur 1.

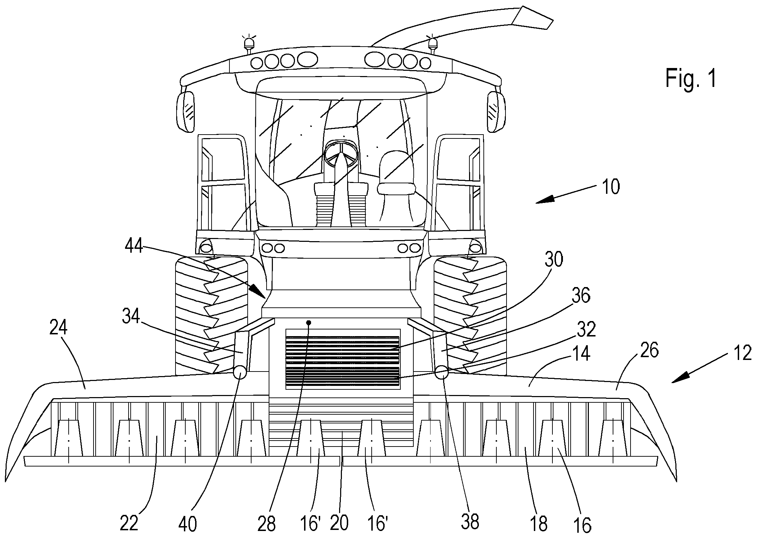

Die Figur 1 zeigt einen Feldhäcksler 10, der in an sich bekannter Weise ein Fahrgestell aufweist, das sich auf vorderen, angetriebenen Rädern und rückwärtigen, lenkbaren Rädern abstützt. An der Vorderseite befindet sich ein Einzugsgehäuse 44, in dem obere und untere Vorpresswalzen 30, 32 angeordnet sind, die ihnen zugeführtes Erntegut im Erntebetrieb vorverdichten und einer Häckseltrommel zuführen, die es zerkleinert. Das Erntegut wird dann über einen Nachbeschleuniger und einen Auswurfkrümmer auf ein begleitendes Transportfahrzeug überladen.

Am Einzugsgehäuse 44 ist (abnehmbar) ein Grüngutschneidwerk 12 befestigt. Es umfasst einen tragenden Rahmen 14, an dem in der dargestellten Ausführungsform die Mähelemente 16,16' seitlich nebeneinander abgestützt sind. Die Mähelemente 16, 16' rotieren im Erntebetrieb um zumindest näherungsweise vertikale Achsen und werden vom Feldhäcksler 10 elektrisch, hydraulisch oder mechanisch angetrieben. Die Mähelemente 16, 16' können als Mähscheiben oder, wie dargestellt, als Mähtrommeln ausgeführt sein. In den äußeren Bereichen des Grüngutschneidwerks 12 sind in Vorwärtsrichtung V rückwärtig der Mähelemente 16 Querförderer 18, 22 angeordnet, die das durch die vor ihnen angeordneten Mähelemente 16 abgeschnittene Erntegut quer zur Mitte des Grüngutschneidwerks 12 transportieren.

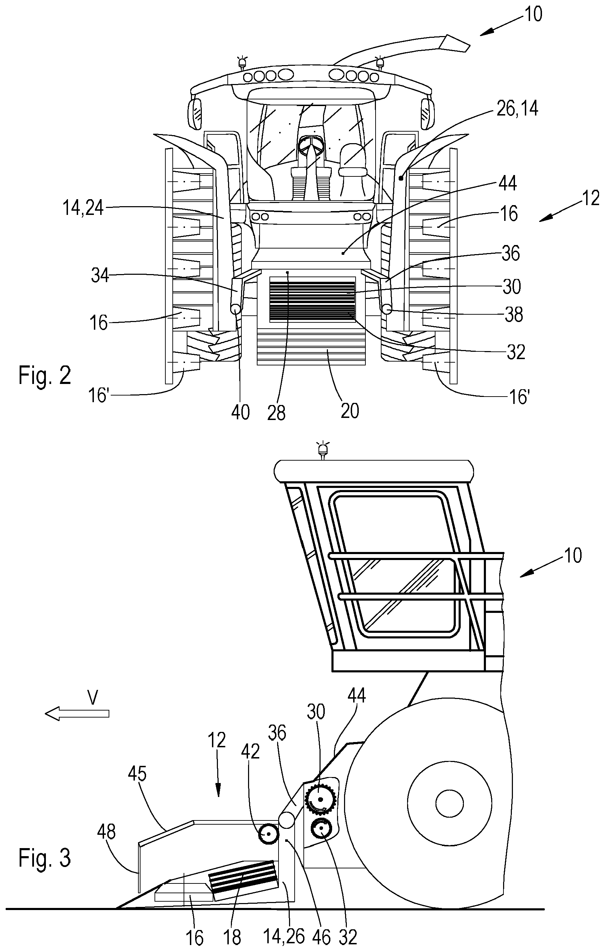

Die Querförderer 18, 22 sind als Förderbänder ausgeführt und leicht nach vorn und unten geneigt, wie in der Figur 3 erkennbar ist. In der Mitte des Grüngutschneidwerks 12 wird das Erntegut dann durch einen Abgabeförderer 20 übernommen, der ebenfalls als Förderband ausgeführt und leicht nach vorn und unten geneigt ist, wie die Querförderer 18, 22. Der Abgabeförderer 20 verbringt das seitlich durch die Querförderer 18, 22 herangeförderte Erntegut und das durch die direkt vor dem Abgabeförderer 20 angeordneten Mähelemente 16' abgeschnittene Erntegut durch eine hintere Abgabeöffnung 46 des Grüngutschneidwerks 12 in das Einzugsgehäuse 44, unter Unterstützung durch einen über ihm und unmittelbar vor der Abgabeöffnung 46 angeordneten, weiteren Förderer 42, der als angetriebene Fördertrommel mit quer zur Vorwärtsrichtung V ausgerichteter Drehachse ausgeführt ist.

Die Querförderer 18, 22, der Abgabeförderer 20 sowie der weitere Förderer können vom Feldhäcksler her 10 elektrisch, hydraulisch oder mechanisch angetrieben werden. Oberhalb der Querförderer 18, 22 und des Abgabeförderers 20 befindet sich eine Abdeckung bzw. Staubschutzhaube 45 und an deren vorderem Rand eine Schutzplane 48.

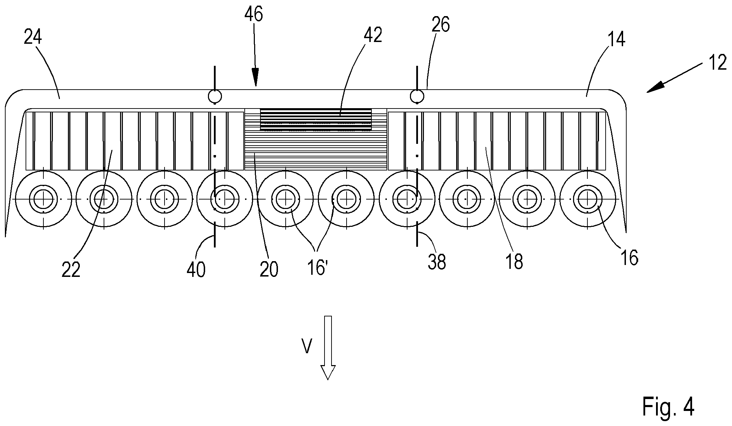

Der Rahmen 14 setzt sich aus einem mittleren Teil 28, der am Einzugsgehäuse 44 befestigt ist und den Abgabeförderer 20 und den weiteren Förderer 42 trägt, und zwei Außenteilen 24, 26 zusammen, die jeweils einen Querförderer 18 bzw. 22 und die vor ihnen liegende Hälfte der Mähelemente 16 tragen, einschließlich der direkt vor dem mittleren Teil 28 liegenden Mähelemente 16'. Die Außenteile 24, 26 sind durch Schwenkachsen 38 bzw. 40 an Armen 34 bzw. 36 angelenkt, die ihrerseits mit dem mittleren Teil 28 starr verbunden sind. Durch einen nicht gezeigten Verstellantrieb, z.B. Hydraulikzylinder, können die Außenteile 24, 26 um die Schwenkachsen 38 und 40 zwischen der in den Figuren 1, 3 und 4 gezeigten Betriebsposition und einer in der Figur 2 gezeigten Transportposition verschwenkt werden, in welcher sie gegenüber der Betriebsposition um die sich horizontal und in Vorwärtsrichtung V erstreckenden Schwenkachsen 38 und 40 um etwa 90° nach innen und oben gedreht sind.

Die Schwenkachsen 38 und 40 befinden sich hinreichend weit oberhalb der durch die Oberseiten der Querförderer 18, 22 definierten Ebene, damit auch die direkt vor dem mittleren Teil 28 liegenden Mähelemente 16' in der Transportposition einen hinreichenden Bodenabstand haben. Aus diesem Grunde kann es auch sinnvoll sein, das Einzugsgehäuse 44 durch eine selbsttätige Steuerung gegenüber dem Fahrgestell des Feldhäckslers 10 anzuheben, wenn die Außenteile 24, 26 durch eine Bedienereingabe in die Transportstellung verbracht werden.

## Patentansprüche

1. Grüngutschneidwerk (12) zur Verwendung an einem Feldhäcksler (10), umfassend:
einen sich quer zu einer Vorwärtsrichtung erstreckenden Rahmen (14),
eine Anzahl von an der Vorderseite des Grüngutschneidwerks (12) über dessen Breite verteilten, um die Hochachse in Drehung versetzbaren Mähelementen (16, 16') zum Abschneiden von Erntegut vom Boden, und
zwei an den Seiten des Grüngutschneidwerks (12) angeordnete Querförderer (18, 22), die eingerichtet sind, das von den in Vorwärtsrichtung (V) davor angeordneten Mähelementen (16) abgeschnittene Erntegut zur Mitte des Grüngutschneidwerks (12) zu fördern, wo es durch einen Abgabeförderer (20), der eingerichtet ist, auch das von den vor dem Abgabeförderer (20) angeordneten Mähelementen (16') abgeschnittene Erntegut abzufördern, nach hinten durch eine rückwärtige Abgabeöffnung (46) des Grüngutschneidwerks (12) abförderbar ist,
wobei der Rahmen (14) einen mittleren Teil (28) und zwei Außenteile (24, 26) aufweist, welche durch einen zugehörigen Verstellantrieb zwischen einer abgesenkten Betriebsposition und einer angehobenen Transportposition bewegbar sind, in der sie um horizontale, sich in Vorwärtsrichtung erstreckende Schwenkachsen (38, 40) gegenüber dem mittleren Teil (28) nach oben geschwenkt sind,
und die Außenteile (24, 26) des Rahmens (14) jeweils einen Querförderer (18, 22) und die davor angeordneten Mähelemente (16) abstützen und der mittlere Teil (28) den Abgabeförderer (20) abstützt,
**dadurch gekennzeichnet, dass** die Außenteile (24, 26) auch jeweils die ihnen benachbarte Hälfte der vor dem Abgabeförderer (20) angeordneten Mähelemente (16') abstützen, sodass die besagten Mähelemente (16') gemeinsam mit den Außenteilen (24, 26) in die nach oben geschwenkte Transportposition verschwenkbar sind.

2. Grüngutschneidwerk (12) nach Anspruch 1, wobei die Außenteile (24, 26) um jeweils etwa 90° zwischen der Betriebs- und Transportposition verschwenkbar sind.

3. Grüngutschneidwerk (12) nach einem der vorhergehenden Ansprüche, wobei die Querförderer (18, 22) und/oder der Abgabeförderer (20) ein Förderband aufweisen.

4. Grüngutschneidwerk (12) nach Anspruch 3, wobei die Förderbänder nach vorn und unten hin geneigt sind.

5. Grüngutschneidwerk (12) nach einem der vorhergehenden Ansprüche, wobei die Schwenkachsen (38, 40) oberhalb der durch die Querförderer (18, 22) definierten Ebene liegen.

6. Grüngutschneidwerk (12) nach einem der vorhergehenden Ansprüche, wobei der Abgabeöffnung (46) benachbart oberhalb des Abgabeförderers (20) ein weiterer Förderer (42) angeordnet ist.

## Claims

1. Forage cutter (12) for use on a forage harvester (10), comprising:
a frame (14) extending transversely with respect to a forwards direction,
a number of mowing elements (16, 16') which are distributed on the front side of the forage cutter (12) over the width thereof, can be set into rotation about the vertical axis and are intended for cutting off crop from the ground, and
two transverse conveyors (18, 22) which are arranged at the sides of the forage cutter (12) and are designed to convey the crop which has been cut off by the mowing elements (16) arranged in front of it in the forwards direction (V) to the centre of the forage cutter (12) where the crop can be conveyed away to the rear through a rear discharge opening (46) of the forage cutter (12) by a discharge conveyor (20) which is configured to also convey away the crop cut off by the mowing elements (16') arranged in front of the discharge conveyor (20),
wherein the frame (14) has a central part (28) and two outer parts (24, 26) which are movable by an associated adjusting drive between a lowered operating position and a raised transport position in which they are pivoted upwards in relation to the central part (28) about horizontal pivot axes (38, 40) extending in the forwards direction,
and the outer parts (24, 26) of the frame (14) each support a transverse conveyor (18, 22) and the mowing elements (16) arranged in front of the latter, and the central part (28) supports the discharge conveyor (20),
**characterized in that** the outer parts (24, 26) also each support the half, which is adjacent to them, of the mowing elements (16') arranged in front of the discharge conveyor (20), and therefore said mowing elements (16') are pivotable together with the outer parts (24, 26) into the upwardly pivoted transport position.

2. Forage cutter (12) according to Claim 1, wherein the outer parts (24, 26) are pivotable by approximately 90° in each case between the operating position and transport position.

3. Forage cutter (12) according to one of the preceding claims, wherein the transverse conveyors (18, 22) and/or the discharge conveyor (20) have/has a conveyor belt.

4. Forage cutter (12) according to Claim 3, wherein the conveyor belts are inclined forwards and downwards.

5. Forage cutter (12) according to one of the preceding claims, wherein the pivot axes (38, 40) lie above the plane defined by the transverse conveyors (18, 22).

6. Forage cutter (12) according to one of the preceding claims, wherein a further conveyor (42) is arranged adjacent to the discharge opening (46) above the discharge conveyor (20).

## Revendications

1. Barre de coupe pour fourrage vert (12) destinée à être utilisée sur une ensileuse (10), comprenant :
un cadre (14) s'étendant transversalement à une direction d'avance,
une pluralité d'organes faucheurs (16, 16') répartis sur le côté avant de la barre de coupe pour fourrage vert (12) sur toute la largeur de cette dernière, pouvant être mis en rotation autour de l'axe vertical pour couper la récolte à partir du sol, et
deux transporteurs transversaux (18, 22) disposés au niveau des côtés de la barre de coupe pour fourrage vert (12), qui sont prévus pour transporter, vers le centre de la barre de coupe pour fourrage vert (12), la récolte coupée par les organes faucheurs (16) disposés devant ceux-ci dans la direction d'avance (V), la récolte pouvant être évacuée à cet endroit par un transporteur de sortie (20) qui est prévu pour évacuer également la récolte coupée par les organes faucheurs (16') disposés avant le transporteur de sortie (20), vers l'arrière à travers une ouverture de sortie arrière (46) de la barre de coupe pour fourrage vert (12),
le cadre (14) présentant une partie centrale (28) et deux parties extérieures (24, 26) qui peuvent être déplacées par un entraînement de réglage associé entre une position fonctionnelle abaissée et une position de transport soulevée dans laquelle elles sont pivotées vers le haut par rapport à la partie centrale (28) autour d'axes de pivotement horizontaux (38, 40) s'étendant dans la direction d'avance,
et les parties extérieures (24, 26) du cadre (14) supportant à chaque fois un transporteur transversal (18, 22) et les organes faucheurs (16) disposés devant ceux-ci et la partie centrale (28) supportant le transporteur de sortie (20),
**caractérisée en ce que** les parties extérieures (24, 26) supportent également à chaque fois la moitié qui leur est adjacente des organes faucheurs (16') disposés devant le transporteur de sortie (20), de telle sorte que lesdits organes faucheurs (16') puissent pivoter conjointement avec les parties extérieures (24, 26) dans la position de transport pivotée vers le haut.

2. Barre de coupe pour fourrage vert (12) selon la revendication 1, dans laquelle les parties extérieures (24, 26) peuvent pivoter à chaque fois d'environ 90° entre la position fonctionnelle et la position de transport.

3. Barre de coupe pour fourrage vert (12) selon l'une quelconque des revendications précédentes, dans laquelle les transporteurs transversaux (18, 22) et/ou le transporteur de sortie (20) présentent une bande transporteuse.

4. Barre de coupe pour fourrage vert (12) selon la revendication 3, dans laquelle les bandes transporteuses sont inclinées vers l'avant et vers le bas.

5. Barre de coupe pour fourrage vert (12) selon l'une quelconque des revendications précédentes, dans laquelle les axes de pivotement (38, 40) sont situés au-dessus du plan défini par les transporteurs transversaux (18, 22).

6. Barre de coupe pour fourrage vert (12) selon l'une quelconque des revendications précédentes, dans laquelle un transporteur supplémentaire (42) est disposé en position adjacente à l'ouverture de sortie (46) au-dessus du transporteur de sortie (20).
